# EUROPEAN PATENT APPLICATION

(11) **EP 4 593 256 A1**
(43) Date of publication of application: **30.07.2025**
(21) Application number: 24222914.4
(22) Date of filing: 23.12.2024
(51) Int. Cl.: H02K 1/276, H02K 1/279

(54) **PERMANENT MAGNET ROTOR FOR AN ELECTRIC MACHINE**

(30) Priority: 23.01.2024 JP 2024008314
(71) Applicant: TOYOTA JIDOSHA KABUSHIKI KAISHA, Aichi-ken, 471-8571 (JP)
(72) Inventor: TAKAO, Ren, Toyota-shi, 471-8571 (JP); ASAOKA, Hironori, Toyota-shi, 471-8571 (JP); DEGUCHI, Junichi, Toyota-shi, 471-8571 (JP); HISATSUNE, Kazuya, Toyota-shi, 471-8571 (JP); NAGAI, Shingo, Toyota-shi, 471-8571 (JP); CHIMATA, Kenta, Toyota-shi, 471-8571 (JP)
(74) Representative: J A Kemp LLP

(57) **Abstract**

A magnet (18) in a rotor (10; 110; 210; 310) of an electric motor (100) has: a first major side (20) facing radially outward; a second major side (22) located on the opposite side from the first major side (20); and a first minor side (24) extending between the first major side (20) and the second major side (22). The magnet hole (16a, 16b) includes: a first inner surface (28) facing the first major side (20); a second inner surface (30) facing the second major side (22); and a first positioning portion (32) protruding from the second inner surface (30) and facing the first minor side (24). The number of layers of a sheet (36) located between the first minor side (24) and the first positioning portion (32) is larger than the number of layers of the sheet (36) located between the first major side (20) and the first inner surface (28).

## Description

### BACKGROUND OF THE INVENTION

### 1. Field of the Invention

The technique disclosed in the present specification relates to rotors, and more particularly to a rotor for an electric motor.

### 2. Description of Related Art

Japanese Unexamined Patent Application Publication No. 2017-077086 (JP 2017-077086 A) describes a rotor. This rotor includes: a rotor core having magnet holes extending in an axial direction parallel to the rotation axis of the rotor; magnets inserted in the magnet holes and having a plurality of sides extending in the axial direction; and a sheet. The sheet covers a first major side having a first magnetic pole and facing radially outward, and a second major side having a second magnetic pole and located on the opposite side from the first major side.

### SUMMARY OF THE INVENTION

A technique is known in which the magnets are positioned or fixed by protruding portions provided in the inner surfaces of the magnet holes in such a rotor. Such a protruding portion locally contacts a magnet, and therefore may apply excessive stress on the magnet. One possible way to avoid this is to wrap a sheet in multiple layers around the sides of each magnet. However, if the sides of each magnet are covered by a multiple layers of the sheet, the multiple layers of the sheet act as a barrier against magnetic flux, which reduces magnetic characteristics of the rotor.

In view of the above, the present specification provides a technique that can protect a magnet from a protruding portion provided in a magnet hole while reducing the influence on magnetic characteristics of a rotor.

The technique disclosed in the present specification is embodied in a rotor of an electric motor. A rotor according to a first aspect of the present disclosure includes: a rotor core having a magnet hole extending in an axial direction parallel to a rotation axis of the rotor; a magnet inserted in the magnet hole and having a plurality of sides extending in the axial direction; and a sheet wrapped around the sides of the magnet. The sides of the magnet include: a first major side having a first magnetic pole and facing radially outward; a second major side having a second magnetic pole and located on an opposite side from the first major side; a first minor side extending between the first major side and the second major side; and a second minor side extending between the first major side and the second major side and located on an opposite side from the first minor side. The magnet hole includes: a first inner surface facing the first major side of the magnet; a second inner surface facing the second major side of the magnet; and a first positioning portion protruding from the second inner surface and facing the first minor side of the magnet. The number of layers of the sheet located between the first minor side of the magnet and the first positioning portion of the magnet hole is larger than the number of layers of the sheet located between the first major side of the magnet and the first inner surface of the magnet hole.

In the above rotor, the first positioning portion is provided in the second inner surface of the magnet hole in order to position the magnet in the magnet hole. The first positioning portion protrudes from the second inner surface of the magnet hole, and faces the first minor side of the magnet. Therefore, the first positioning portion of the magnet hole is expected to locally contact the first minor side of the magnet. However, the sheet is wrapped around the sides of the magnet, including the first minor side, so that a plurality of layers of the sheet is interposed between the first minor side of the magnet and the first positioning portion of the magnet hole. With this configuration, the first minor side of the magnet is effectively protected from contact with the first positioning portion. On the other hand, the first major side facing the stator is covered by only a relatively small number of layers (including one layer) of the sheet. Therefore, the magnet can be protected from the first positioning portion of the magnet hole while reducing the influence on the magnetic characteristics of the rotor.

According to a second aspect, in the first aspect, the number of layers of the sheet located between the first minor side of the magnet and the first positioning portion of the magnet hole may be two. In this case, the number of layers of the sheet located between the first major side of the magnet and the first inner surface of the magnet hole may be one. However, these numbers of layers of the sheet may be larger than the above values, and can be designed as appropriate according to the material, thickness, etc. of the sheet.

According to a third aspect, in the first or second aspect, the magnet hole may further include a second positioning portion protruding from the second inner surface and facing the second minor side of the magnet. In this case, the number of layers of the sheet located between the second minor side of the magnet and the second positioning portion of the magnet hole may be larger than the number of layers of the sheet located between the first major side of the magnet and the first inner surface of the magnet hole. As described above, there may be a plurality of positioning portions in the magnet hole. In this case, each of the positioning portions is preferably covered by a plurality of layers of the sheet.

According to a fourth aspect, in the third aspect, the number of layers of the sheet located between the second minor side of the magnet and the second positioning portion of the magnet hole may be two. In this case, the number of layers of the sheet located between the first major side of the magnet and the first inner surface of the magnet hole may be one. However, these numbers of layers of the sheet may be larger than the above values, and can be designed as appropriate according to the material, thickness, etc. of the sheet.

According to a fifth aspect, in any one of the first to fourth aspect, the number of layers of the sheet located between the second major side of the magnet and the second inner surface of the magnet hole may be larger than the number of layers of the sheet located between the first major side of the magnet and the first inner surface of the magnet hole. With this configuration, the first major side facing radially outward is covered by a smaller amount of sheet than the second major side facing radially inward. This can reduce the influence on the magnetic characteristics of the rotor.

According to a sixth aspect, in any one of the first to fifth aspect, the sheet may be a single sheet material. In this case, a wrapping start end of the single sheet material may be located on either the first minor side or the second minor side of the magnet. A wrapping finish end of the single sheet material may be located on either the first minor side or the second minor side of the magnet. With this configuration, the ends of the sheet are not present on the first and second major sides each having a magnetic pole. This can reduce the influence on the magnetic characteristics of the rotor.

According to a seventh aspect, in any one of the first to sixth aspects, the magnet hole may further include at least one crimped portion protruding from the second inner surface and contacting the second major side of the magnet via the sheet. In this case, the number of layers of the sheet located between the second major side of the magnet and the crimped portion of the magnet hole may be larger than the number of layers of the sheet located between the first major side of the magnet and the first inner surface of the magnet hole.

In the above aspect, the crimped portion is provided in the second inner surface of the magnet hole in order to fix the magnet in the magnet hole. The crimped portion protrudes from the second inner surface of the magnet hole. However, since a plurality of layers of the sheet is interposed between the crimped portion of the magnet hole and the second major side of the magnet, the second major side of the magnet is effectively protected from contact with the crimped portion of the magnet hole. On the other hand, the first major side having a magnetic pole and facing the stator is covered by a relatively small number of layers (including one layer) of the sheet. Therefore, the magnet can be protected from the crimped portion of the magnet hole while reducing the influence on the magnetic characteristics of the rotor.

According to an eighth aspect, in the seventh aspect, the number of layers of the sheet located between the second major side of the magnet and the crimped portion of the magnet hole may be the same as the number of layers of the sheet located between the first minor side of the magnet and the first positioning portion of the magnet hole. However, as other embodiments, the number of layers of the sheet located between the second major side of the magnet and the crimped portion of the magnet hole may be either less than or larger than the number of layers of the sheet located between the first minor side of the magnet and the first positioning portion of the magnet hole.

According to a ninth aspect, in any of the first to eighth aspects, the sheet may be at least partially composed of a foamable material. With this configuration, the space between the magnet and the magnet hole is filled with the foamable material without leaving any gap therebetween. Therefore, the position of the magnet is stabilized. Since the foamable material has high flexibility, it can effectively protect each side of the magnet from a protruding portion such as the first positioning portion, the second positioning portion, and/or the crimped portion.

According to a tenth aspect, in any of the first to ninth aspects, the sheet may be at least partially composed of an insulating material. With this configuration, the magnet and the magnet hole can be electrically insulated, so that loss due to an eddy current in the rotor can be reduced.

According to an eleventh aspect, in any of the first to tenth aspects, the sheet may be at least partially composed of an adhesive material. With this configuration, the adhesive material of the sheet can fix the magnet in the magnet hole.

According to a twelfth aspect, in any of the first to eleventh aspects, at least part of the magnet hole may be filled with a filler outside the sheet. With this configuration, the filler can fix the magnet in the magnet hole.

The technique disclosed in the present specification is embodied in another rotor of an electric motor. A rotor according to another aspect of the present disclosure includes: a rotor core having a magnet hole extending in an axial direction parallel to a rotation axis of the rotor; a magnet inserted in the magnet hole and having a plurality of sides extending in the axial direction; and a sheet wrapped around the sides of the magnet. The sides of the magnet include: a first major side having a first magnetic pole and facing radially outward; a second major side having a second magnetic pole and located on an opposite side from the first major side; a first minor side extending between the first major side and the second major side; and a second minor side extending between the first major side and the second major side and located on an opposite side from the first minor side. The magnet hole includes: a first inner surface facing the first major side of the magnet; a second inner surface facing the second major side of the magnet; and a crimped portion protruding from the second inner surface and contacting the second major side of the magnet via the sheet. The number of layers of the sheet located between the second major side of the magnet and the crimped portion of the magnet hole is larger than the number of layers of the sheet located between the first major side of the magnet and the first inner surface of the magnet hole.

In the above rotor, the crimped portion is provided in the second inner surface of the magnet hole in order to fix the magnet in the magnet hole. The crimped portion protrudes from the second inner surface of the magnet hole. However, since a plurality of layers of the sheet is interposed between the crimped portion of the magnet hole and the second major side of the magnet, the second major side of the magnet is effectively protected from contact with the crimped portion of the magnet hole. On the other hand, the first major side having a magnetic pole and facing the stator is covered by a relatively small number of layers (including one layer) of the sheet. Therefore, the magnet can be protected from the crimped portion of the magnet hole while reducing the influence on the magnetic characteristics of the rotor.

According to a fourteenth aspect, in the above another aspect, at least part of the magnet hole may be filled with a filler outside the sheet.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram of an electric motor 100 using a rotor 10 according to a first embodiment, as viewed in a direction perpendicular to a rotation axis R, where a portion of the rotor 10 to the left of the rotation axis R in the figure is shown in section;
FIG. 2 is a sectional view taken along line II-II in FIG. 1, showing one axial end face of a rotor core 14;
FIG. 3 is an enlarged view of portion III in FIG. 2;
FIG. 4 is an enlarged view corresponding to FIG. 3, showing the configuration of a rotor 110 according to a second embodiment;
FIG. 5 is an enlarged view corresponding to FIG. 3, showing the configuration of a rotor 210 according to a third embodiment;
FIG. 6 is an enlarged view corresponding to FIG. 3, showing the configuration of a rotor 310 according to a fourth embodiment;
FIG. 7 is an enlarged view corresponding to FIG. 3, showing the configuration of a rotor 410 according to a fifth embodiment; and
FIG. 8 is an enlarged view corresponding to FIG. 3, showing the configuration of a rotor 510 according to a sixth embodiment.

### DETAILED DESCRIPTION OF EMBODIMENTS

### First Embodiment

A rotor 10 according to a first embodiment will be described with reference to the drawings. The rotor 10 of the present embodiment is used in an electric motor 100. The electric motor 100 includes the rotor 10, a stator 102, and a housing 104. The housing 104 is a housing member. The housing 104 accommodates the rotor 10 and the stator 102. As an example, the housing 104 is mainly made of metal. The rotor 10 is supported by the housing 104 so as to be rotatable about a rotation axis R. The housing 104 may further accommodate a power transmission mechanism (not shown) such as a reduction mechanism or a differential mechanism. However, the technique disclosed in this specification is not limited to this.

The stator 102 has a generally cylindrical shape about a rotation axis R. The stator 102 is disposed radially outward of the rotor 10. The stator 102 is fixed to an inner wall of the housing 104. The stator 102 includes a stator core 102a and a stator coil 102b. The stator core 102a is made of a soft magnetic material such as electrical steel. As an example, the stator core 102a in the present embodiment is composed of a stack of a plurality of electrical steel sheets. The stator coil 102b is wrapped around the stator core 102a, and is configured to magnetize the stator core 102a. As an example, the electric motor 100 of the present embodiment is a three-phase motor, and the stator coil 102b includes one or more U-phase coils, one or more V-phase coils, and one or more W-phase coils. However, the specific configuration of the stator 102 is not particularly limited.

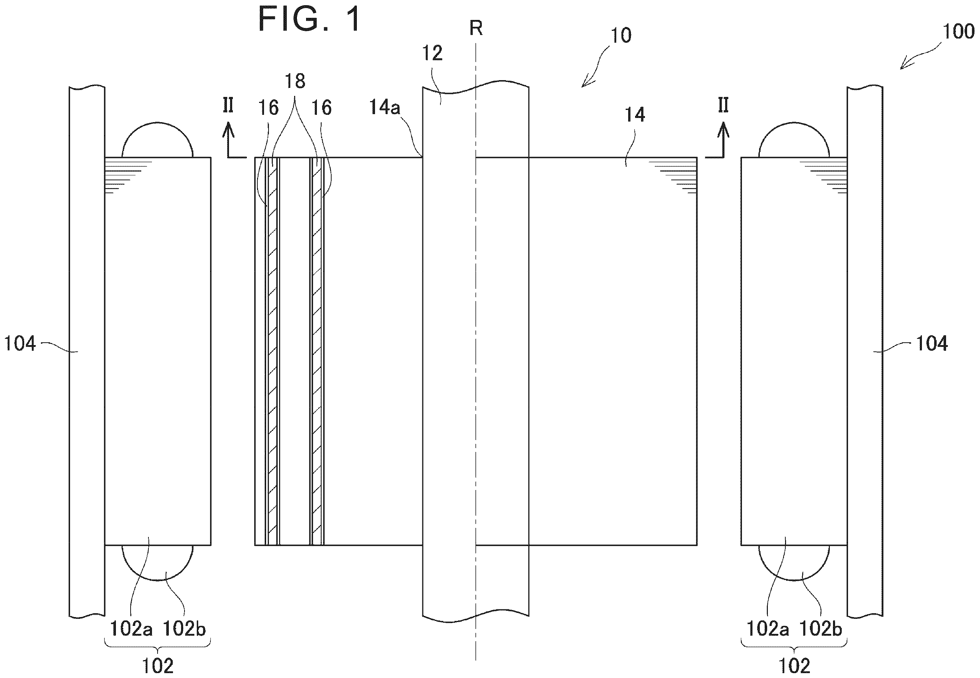

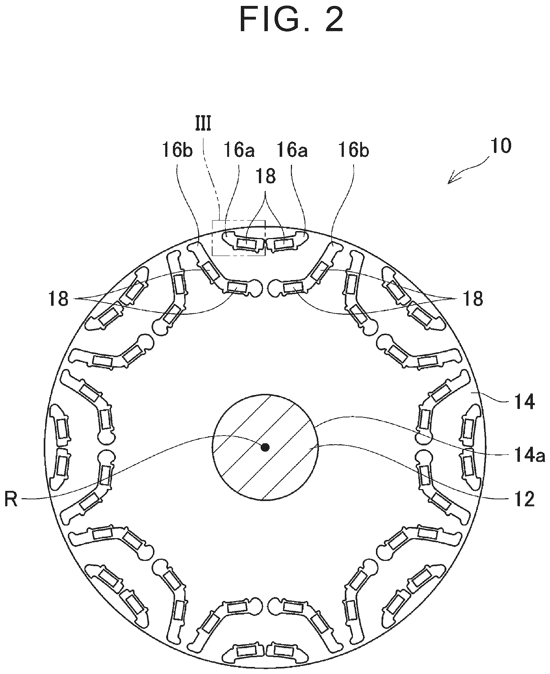

As shown in FIGS. 1 and 2, the rotor 10 includes a shaft 12 and a rotor core 14. The shaft 12 is disposed such that its central axis coincides with the rotation axis R. The shaft 12 is made of metal, for example, stainless steel. The rotor core 14 is located radially outward of the shaft 12 and has a cylindrical shape extending parallel to the rotation axis R. The rotor core 14 is made of a soft magnetic material such as electrical steel. As an example, the rotor core 14 in the present embodiment is composed of a stack of a plurality of electrical steel sheets. The rotor core 14 has a through hole 14a in the center, and the shaft 12 is inserted into the through hole 14a. The rotor core 14 is fixed to the shaft 12 and is not allowed to rotate relative to the shaft 12.

As shown in FIGS. 1 and 2, the rotor 10 further includes a plurality of magnet holes 16a, 16b and a plurality of magnets 18. The magnet holes 16a, 16b are located in an outer peripheral portion of the rotor core 14, and are regularly arranged in the circumferential direction. Each magnet hole 16a, 16b extends in the axial direction parallel to the rotation axis R of the rotor 10. The sectional shape of each magnet hole 16a, 16b is a slot shape extending in the circumferential direction, but the longitudinal axis of the slot shape is angled with respect to the circumferential direction. The magnet holes 16a, 16b include a plurality of pairs of first magnet holes 16a and a plurality of pairs of second magnet holes 16b. Each pair of first magnet holes 16a is provided symmetrically in the circumferential direction of the rotor core 14. One magnet 18 is inserted in each of the first magnet holes 16a. Similarly, each pair of second magnet holes 16b is provided symmetrically in the circumferential direction of the rotor core 14. Each pair of second magnet holes 16b is located radially inward of a corresponding pair of first magnet holes 16a. Two magnets 18 are inserted in each of the second magnet holes 16b. Each magnet 18 generally has the shape of a rectangular parallelepiped extending in the axial direction parallel to the rotation axis R of the rotor 10. Each magnet 18 is, but not particularly limited to, a permanent magnet.

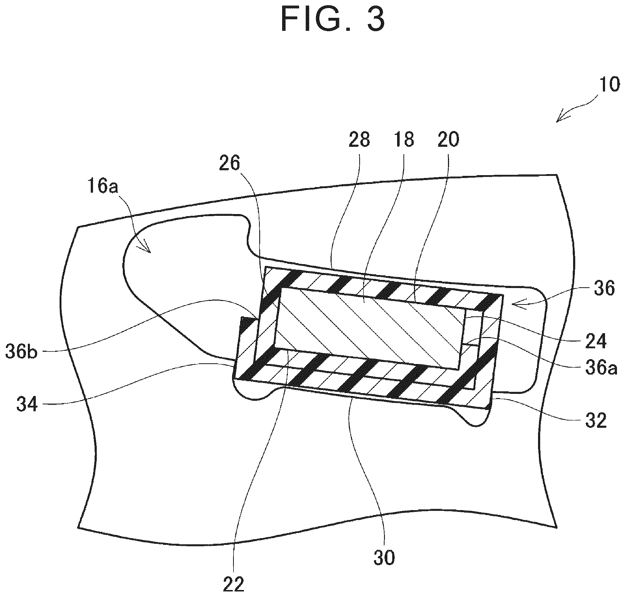

Next, a configuration related to one first magnet hole 16a and a magnet 18 inserted therein will be described with reference to FIG. 3. The configuration described below is also used similarly for the other first magnet holes 16a and a magnet 18 inserted in each of the other first magnet holes 16a and for the second magnet holes 16b and two magnets 18 inserted in each of the second magnet holes 16b.

As shown in FIG. 3, the magnet 18 has a plurality of sides 20, 22, 24, and 26 extending in the axial direction. The sides 20, 22, 24, and 26 include a first major side 20, a second major side 22, a first minor side 24, and a second minor side 26. The first major side 20 has a first magnetic pole and faces radially outward. The first major side 20 facing radially outward means that a vector normal to the first major side 20 includes at least a component facing radially outward. That is, each of the magnets 18 need not necessarily be perpendicular to the radial direction, and may be tilted with respect to the radial direction. The first magnetic pole is either a north pole or a south pole. In the electric motor 100, the first major side 20 of the rotor 10 faces the stator 102. The second major side 22 has a second magnetic pole and is located on the opposite side from the first major side 20. The second magnetic pole is a magnetic pole opposite to the first magnetic pole and may be either a north pole or a south pole. The first minor side 24 extends between the first major side 20 and the second major side 22. The second minor side 26 extends between the first major side 20 and the second major side 22, and is located on the opposite side from the first minor side 24. When the rotor 10 is viewed from a direction parallel to the rotation axis R, the first major side 20, the first minor side 24, the second major side 22, and the second minor side 26 are arranged in series in this order. The area of each of the first and second major sides 20, 22 is greater than the area of each of the first and second minor sides 24, 26.

As shown in FIG. 3, the first magnet hole 16a has a first inner surface 28 and a second inner surface 30. The first inner surface 28 faces the first major side 20 of the magnet 18. The second inner surface 30 faces the second major side 22 of the magnet 18. The second inner surface 30 is provided with a first positioning portion 32 and a second positioning portion 34. These positioning portions 32, 34 are portions that position the magnet 18 in the first magnet hole 16a. The first positioning portion 32 protrudes from the second inner surface 30 and faces the first minor side 24 of the magnet 18. The second positioning portion 34 protrudes from the second inner surface 30 and faces the second minor side 26 of the magnet 18. Since the second inner surface 30 of the first magnet hole 16a is angled with respect to the circumferential direction, the first positioning portion 32 is located radially inward of the second positioning portion 34.

In the above rotor 10, the positioning portions 32, 34 are provided in the second inner surface 30 of the first magnet hole 16a in order to position the magnet 18 in the first magnet hole 16a. The positioning portions 32, 34 protrude from the second inner surface 30 of the first magnet hole 16a, and face the minor sides 24, 26 of the magnet 18. Therefore, the positioning portions 32, 34 of the first magnet hole 16a are expected to locally contact the minor sides 24, 26 of the magnet 18.

In this regard, as shown in FIG. 3, the rotor 10 further includes a sheet 36. The sheet 36 in the present embodiment is a single sheet material. The sheet 36 is wrapped around the sides 20, 22, 24, and 26 of the magnet 18. As an example, a wrapping start end 36a of the sheet 36 is located on the first minor side 24 of the magnet 18, and a wrapping finish end 36b of the sheet 36 is located on the second minor side 26 of the magnet 18. For example, in the manufacturing process of the rotor 10, the sheet 36 is wrapped around the magnet 18 with the end 36a of the sheet 36 being positioned on the first minor side 24 of the magnet 18. At this time, the second major side 22, the second minor side 26, and the first major side 20 are sequentially covered by the sheet 36 in this order. The sheet 36 is cut when the sheet 36 is located again on the second minor side 26 of the magnet 18. As a result, the wrapping start end 36a of the sheet 36 is located on the first minor side 24 of the magnet 18, and the wrapping finish end 36b of the sheet 36 is located on the second minor side 26 of the magnet 18. In other words, the wrapping start end 36a of the sheet 36 is the end located in the innermost layer of the sheet 36 wrapped around the magnet 18, and the wrapping finish end 36b of the sheet 36 is the end located in the outermost layer of the sheet 36 wrapped around the magnet 18.

In the present embodiment, there are two layers of the sheet 36 between the first minor side 24 of the magnet 18 and the first positioning portion 32 of the first magnet hole 16a, and there is one layer of the sheet 36 between the first major side 20 of the magnet 18 and the first inner surface 28 of the first magnet hole 16a. There are two layers of the sheet 36 between the second minor side 26 of the magnet 18 and the second positioning portion 34 of the first magnet hole 16a, and there are two layers of the sheet 36 between the second major side 22 of the magnet 18 and the second inner surface 30 of the first magnet hole 16a.

With this configuration, the minor sides 24, 26 of the magnet 18 are effectively protected from contact with the positioning portions 32, 34. On the other hand, the first major side 20 having a magnetic pole and facing the stator 102 is covered by only a relatively small number of layers (one layer in the present embodiment) of the sheet 36. Therefore, the magnet 18 can be protected from the positioning portions 32, 34 of the first magnet hole 16a while reducing the influence on the magnetic characteristics of the rotor 10.

In the above rotor 10, as shown in FIG. 3, the number of layers of the sheet 36 located between the second major side 22 of the magnet 18 and the second inner surface 30 of the first magnet hole 16a (two layers in the present embodiment) is larger than the number of layers of the sheet 36 located between the first major side 20 of the magnet 18 and the first inner surface 28 of the first magnet hole 16a (one layer in the present embodiment), although the technique disclosed in the present specification is not particularly limited to this. With this configuration, the first major side 20 facing radially outward is covered by a smaller amount of sheet 36 than the second major side 22 facing radially inward. This can reduce the influence on the magnetic characteristics of the rotor 10.

In the present embodiment, there are two layers of the sheet 36 between each of the minor sides 24, 26 of the magnet 18 and a corresponding one of the positioning portions 32, 34 of the first magnet hole 16a, and there is one layer of the sheet 36 between the first major side 20 of the magnet 18 and the first inner surface 28 of the first magnet hole 16a. However, in other embodiments, these numbers of layers may be larger than those in the present embodiment. In this case, the number of layers of the sheet 36 between each of the minor sides 24, 26 of the magnet 18 and a corresponding one of the positioning portions 32, 34 of the first magnet hole 16a need only be larger than the number of layers of the sheet 36 between the first major side 20 of the magnet 18 and the first inner surface 28 of the first magnet hole 16a. The number of layers of the sheet 36 between the first minor side 24 of the magnet 18 and the first positioning portion 32 of the first magnet hole 16a may be either larger than or less than the number of layers of the sheet 36 between the second minor side 26 of the magnet 18 and the second positioning portion 34 of the first magnet hole 16a.

In the present embodiment, the first magnet hole 16a is provided with the two positioning portions 32, 34. However, the number of positioning portions 32, 34 provided in the first magnet hole 16a is not particularly limited. In another embodiment, the first magnet hole 16a may be provided with one positioning portion. In this case, the positioning portion is preferably covered by a plurality of layers of the sheet 36. Alternatively, as still another embodiment, the first magnet hole 16a may be provided with three or more positioning portions. In this case, each of the positioning portions is preferably covered by a plurality of layers of the sheet 36.

In the present embodiment, the wrapping start end 36a of the sheet 36 is located on the first minor side 24 of the magnet 18, and the wrapping finish end 36b of the sheet 36 is located on the second minor side 26 of the magnet 18. With this configuration, the ends 36a, 36b of the sheet 36 are not present on the first and second major sides 20, 22 each having a magnetic pole. This can reduce the influence on the magnetic characteristics of the rotor 10. In another embodiment, the wrapping start end 36a of the sheet 36 may be located on the second minor side 26 of the magnet 18, and the wrapping finish end 36b of the sheet 36 may be located on the first minor side 24 of the magnet 18. The sheet 36 need not necessarily be a single sheet material, and may be a combination of a plurality of sheet materials. For example, the sheet 36 may be composed of a first sheet covering the sides 20, 22, 24, and 26 of the magnet 18 and a second sheet further covering the second major side 22 covered by the first sheet.

The sheet 36 in the present embodiment is at least partially composed of a foamable material, although the technique disclosed in the present specification is not particularly limited to this. With this configuration, the space between the magnet 18 and the first magnet hole 16a is filled with the foamable material without leaving any gap therebetween. Therefore, the position of the magnet 18 is stabilized. Since the foamable material has high flexibility, it can effectively protect the sides 20, 22, 24, and 26 of the magnet 18 from protruding portions such as the positioning portions 32, 34.

In addition to or instead of the above configurations, the sheet 36 in the present embodiment may be at least partially composed of an insulating material. With this configuration, the magnet 18 and the first magnet hole 16a can be electrically insulated, so that loss due to an eddy current in the rotor 10 can be reduced.

In addition to or instead of the above configurations, the sheet 36 in the present embodiment may be at least partially composed of an adhesive material. With this configuration, the adhesive material of the sheet 36 can fix the magnet 18 in the first magnet hole 16a.

In the present embodiment, each pair of second magnet holes 16b is located radially inward of a corresponding pair of first magnet holes 16a, and the magnets 18 are inserted into the magnet holes 16a, 16b. Therefore, the magnets 18 include magnets 18 inserted in the first magnet holes 16a and located on the radially outer side, and magnets 18 inserted in the second magnet holes 16b and located on the radially inner side. That is, in the present embodiment, the magnets 18 are arranged in two layers in the radial direction. However, the magnets 18 need not necessarily be arranged in two layers in the radial direction. In other embodiments, the magnets 18 may be arranged in one layer in the radial direction, or may be arranged in three or more layers in the radial direction. In each of these layers, a plurality of magnets 18 may be arranged in a V-shape in a repetitive manner.

In the present embodiment, each magnet 18 generally has the shape of a rectangular parallelepiped extending in the axial direction parallel to the rotation axis R of the rotor 10. However, the magnets 18 need not necessarily generally have the shape of a rectangular parallelepiped. For example, in another embodiment, each magnet 18 may have the shape of a plate having a curved first major side 20 and a curved second major side 22. Such curved magnets may be arranged in two or more layers in the radial direction.

### Second Embodiment

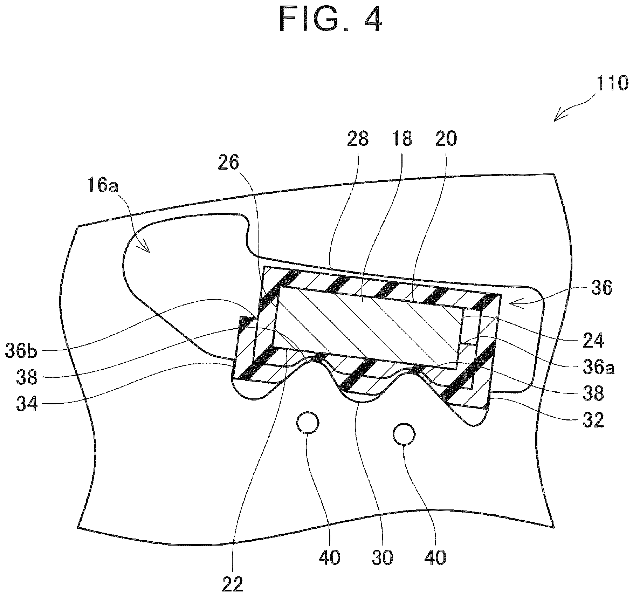

A rotor 110 according to a second embodiment will be described with reference to FIG. 4. As shown in FIG. 4, the rotor 110 of the second embodiment is different from the rotor 10 of the first embodiment in that the first magnet hole 16a is provided with a crimped portion 38. Since the other configurations are the same as those of the rotor 10 of the first embodiment, repetitive description thereof will be omitted. The configuration related to the first magnet hole 16a described in the present embodiment is also used for the other first magnet holes 16a and the second magnet holes 16b.

As shown in FIG. 4, the crimped portion 38 protrudes from the second inner surface 30 and contacts the second major side 22 of the magnet 18 via the sheet 36. In this case, the number of layers of the sheet 36 located between the second major side 22 of the magnet 18 and the crimped portion 38 of the first magnet hole 16a (two layers in the present embodiment) is larger than the number of layers of the sheet 36 located between the first major side 20 of the magnet 18 and the first inner surface 28 of the first magnet hole 16a (one layer in the present embodiment). The number and arrangement of crimped portions 38 are not particularly limited. The crimped portion 38 need only protrude from the second inner surface 30 and contact the second major side 22 of the magnet 18 via the sheet 36. In the rotor 110 of the present embodiment, the crimped portion 38 is formed by stamping, and there are stamping marks 40 near the crimped portion 38 on an axial end face of the rotor 110, although the technique disclosed in the present specification is not particularly limited to this.

In the rotor 110 of the second embodiment, the crimped portion 38 is provided in the second inner surface 30 of the first magnet hole 16a in order to fix the magnet 18 in the first magnet hole 16a. The crimped portion 38 protrudes from the second inner surface 30 of the first magnet hole 16a. However, since a plurality of layers of the sheet 36 is interposed between the crimped portion 38 of the first magnet hole 16a and the second major side 22 of the magnet 18, the second major side 22 of the magnet 18 is effectively protected from contact with the crimped portion 38 of the first magnet hole 16a. On the other hand, the first major side 20 having a magnetic pole and facing the stator 102 is covered by a relatively small number of layers (including one layer) of the sheet 36. Therefore, the magnet 18 can be protected from the crimped portion 38 of the first magnet hole 16a while reducing the influence on the magnetic characteristics of the rotor 110.

As described already, the configuration related to the first magnet hole 16a described in the second embodiment is also used for the other first magnet holes 16a and the second magnet holes 16b. That is, these magnet holes 16a, 16b are also provided with a crimped portion 38 in their second inner surfaces 30. The number of layers of the sheet 36 between the second major side 22 of the magnet 18 and the crimped portion 38 of each of the magnet holes 16a, 16b is larger than the number of layers of the sheet 36 between the first major side 20 of the magnet 18 and the first inner surface 28 of each of the magnet holes 16a, 16b.

In the rotor 110 of the second embodiment, the number of layers of the sheet 36 between the second major side 22 of the magnet 18 and the crimped portion 38 of the first magnet hole 16a is the same as the number of layers of the sheet 36 between the first minor side 24 of the magnet 18 and each of the positioning portions 32, 34 of the first magnet hole 16a, although the technique disclosed in the present specification is not particularly limited to this. In other embodiments, the number of layers of the sheet 36 between the second major side 22 of the magnet 18 and the crimped portion 38 of the first magnet hole 16a may be either less than or larger than the number of layers of the sheet 36 between the first minor side 24 of the magnet 18 and each of the positioning portions 32, 34 of the first magnet hole 16a.

### Third Embodiment

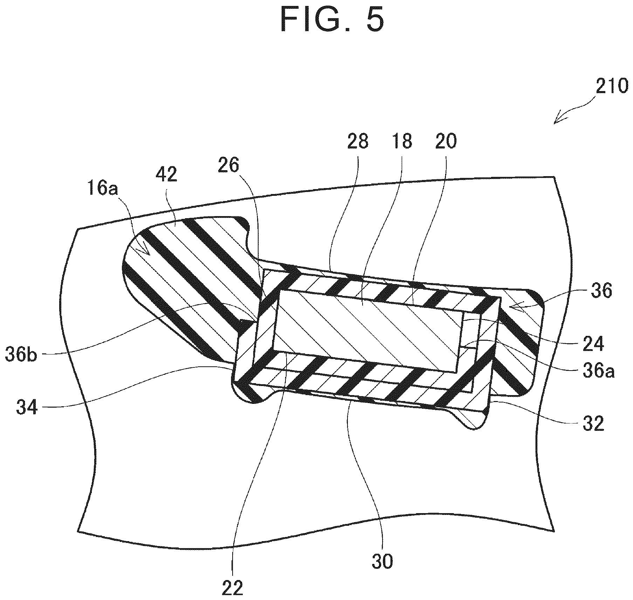

A rotor 210 according to a third embodiment will be described with reference to FIG. 5. As shown in FIG. 5, the rotor 210 of the third embodiment is different from the rotor 10 of the first embodiment in that the first magnet hole 16a is filled with a filler 42. Since the other configurations are the same as those of the rotor 10 of the first embodiment, repetitive description thereof will be omitted. Although not shown in the figure, the other first magnet holes 16a and the second magnet holes 16b are also filled with the same filler 42.

As shown in FIG. 5, the filler 42 fills the gap between the first magnet hole 16a and the sheet 36 that is located outside the sheet 36. With this configuration, the magnet 18 is fixed in the first magnet hole 16a. The filler 42 need not necessarily completely fill the gap between the first magnet hole 16a and the sheet 36. At least part of the gap need only be filled with the filler 42. The material of the filler 42 is not particularly limited. As an example, the material of the filler 42 is preferably an insulating material from an electrical perspective, and is preferably a non-magnetic material from a magnetic perspective. As an example, the filler 42 in the present embodiment is a resin material, and is particularly a thermosetting resin material.

As an example, as shown in FIG. 5, the region of the first magnet hole 16a that is filled with the filler 42 is provided mainly on both sides of the magnet 18. That is, the gap between the first magnet hole 16a and the magnet 18 is divided into a first region located on the first minor side 24 side of the first magnet hole 16a, and a second region located on the second minor side 26 side of the first magnet hole 16a. The wrapping start end 36a of the sheet 36 is located in the first region, and the wrapping start end 36a of the sheet 36 does not directly contact the filler 42. On the other hand, the wrapping finish end 36b of the sheet 36 is located in the second region, and the wrapping finish end 36b of the sheet 36 directly contacts the filler 42. Therefore, when filling the gap between the first magnet hole 16a and the magnet 18 with the filler 42 during manufacture of the rotor 210, the first region where the wrapping start end 36a is located is preferably first filled with the filler 42. This makes it difficult for the filler 42 to penetrate the sheet 36, and thus avoids bending or breaking of the sheet 36.

### Fourth Embodiment

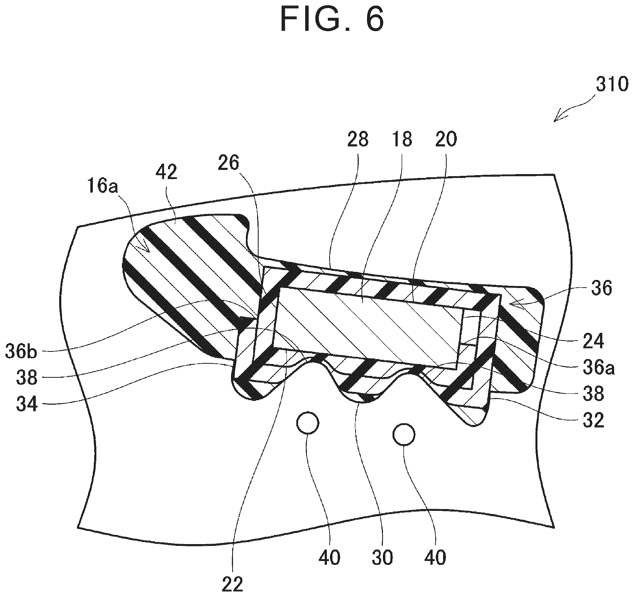

A rotor 310 according to a fourth embodiment will be described with reference to FIG. 6. As shown in FIG. 6, the rotor 310 of the fourth embodiment is different from the rotor 110 of the second embodiment in that the first magnet hole 16a is filled with the filler 42. Since the other configurations are the same as those of the rotor 110 of the second embodiment, repetitive description thereof will be omitted. Although not shown in the figure, the other first magnet holes 16a and the second magnet holes 16b are also filled with the same filler 42. Since the configuration, functions, and effects of the filler 42 in the present embodiment are the same as those of the filler 42 in the third embodiment, repetitive description thereof will be omitted.

### Fifth Embodiment

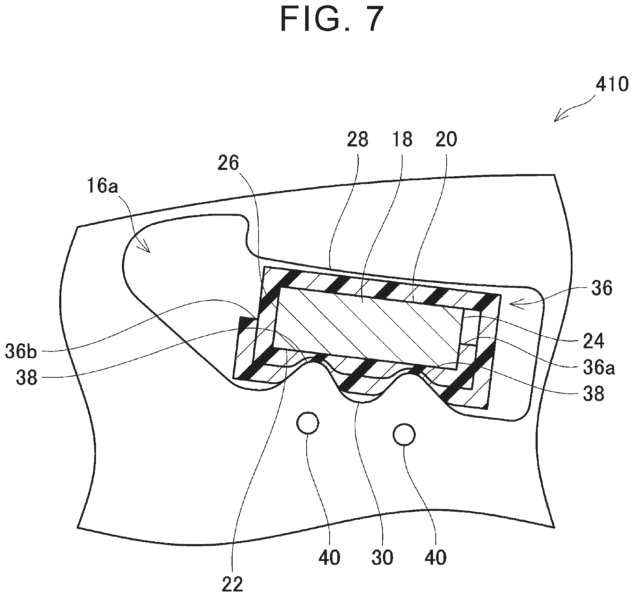

A rotor 410 according to a fifth embodiment will be described with reference to FIG. 7. As shown in FIG. 7, the rotor 410 of the fifth embodiment is different from the rotor 10 of the first embodiment in that the first magnet hole 16a is provided with the crimped portion 38 instead of the positioning portions 32, 34. In other words, the rotor 410 of the fifth embodiment is obtained by removing the positioning portions 32, 34 from the rotor 110 of the second embodiment. The other first magnet holes 16a and the second magnet holes 16b are also not provided with the positioning portions 32, 34. The rotor 410 of the fifth embodiment is different in this respect from the rotor 110 of the second embodiment. Since the other configurations are the same as those of the rotor 110 of the second embodiment, repetitive description thereof will be omitted.

### Sixth Embodiment

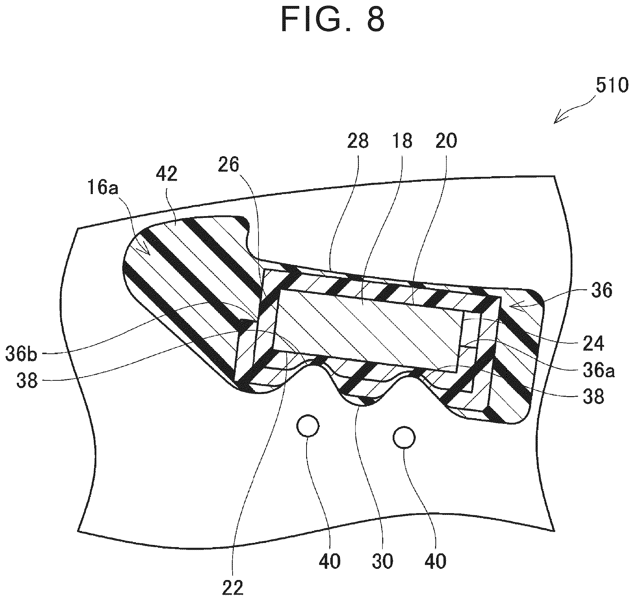

A rotor 510 according to a sixth embodiment will be described with reference to FIG. 8. As shown in FIG. 8, the rotor 510 of the sixth embodiment is different from the rotor 410 of the fifth embodiment in that the first magnet hole 16a is filled with the filler 42. Although not shown in the figure, the other first magnet holes 16a and the second magnet holes 16b are also filled with the same filler 42. Since the configuration, functions, and effects of the filler 42 in the present embodiment are the same as those of the filler 42 in the third and fourth embodiments, repetitive description thereof will be omitted.

While several specific examples have been described in detail above, these are merely illustrative, and are not intended to limit the scope of the claims. The technique described in the claims includes various modifications and alterations of the specific examples illustrated above. The technical elements described in the present specification or illustrated in the drawings exhibit technical utility alone or in combination.

## Claims

1. A rotor (10; 110; 210; 310) of an electric motor (100), the rotor comprising:
a rotor core (14) having a magnet hole (16a, 16b) extending in an axial direction parallel to a rotation axis (R) of the rotor (10; 110; 210; 310);
a magnet (18) inserted in the magnet hole (16a, 16b) and having a plurality of sides extending in the axial direction; and
a sheet (36) wrapped around the sides of the magnet (18), wherein
the sides of the magnet (18) include
a first major side (20) having a first magnetic pole and facing radially outward,
a second major side (22) having a second magnetic pole and located on an opposite side from the first major side (20),
a first minor side (24) extending between the first major side (20) and the second major side (22), and
a second minor side (26) extending between the first major side (20) and the second major side (22) and located on an opposite side from the first minor side (24),
the magnet hole (16a, 16b) includes
a first inner surface (28) facing the first major side (20) of the magnet (18),
a second inner surface (30) facing the second major side (22) of the magnet (18), and
a first positioning portion (32) protruding from the second inner surface (30) and facing the first minor side (24) of the magnet (18), and
the number of layers of the sheet (36) located between the first minor side (24) of the magnet (18) and the first positioning portion (32) of the magnet hole (16a, 16b) is larger than the number of layers of the sheet (36) located between the first major side (20) of the magnet (18) and the first inner surface (28) of the magnet hole (16a, 16b).

2. The rotor (10; 110; 210; 310) according to claim 1, wherein
the number of layers of the sheet (36) located between the first minor side (24) of the magnet (18) and the first positioning portion (32) of the magnet hole (16a, 16b) is two, and
the number of layers of the sheet (36) located between the first major side (20) of the magnet (18) and the first inner surface (28) of the magnet hole (16a, 16b) is one.

3. The rotor (10; 110; 210; 310) according to claim 1, wherein
the magnet hole (16a, 16b) further includes a second positioning portion (34) protruding from the second inner surface (30) and facing the second minor side (26) of the magnet (18), and
the number of layers of the sheet (36) located between the second minor side (26) of the magnet (18) and the second positioning portion (34) of the magnet hole (16a, 16b) is larger than the number of layers of the sheet (36) located between the first major side (20) of the magnet (18) and the first inner surface (28) of the magnet hole (16a, 16b).

4. The rotor (10; 110; 210; 310) according to claim 3, wherein
the number of layers of the sheet (36) located between the second minor side (26) of the magnet (18) and the second positioning portion (34) of the magnet hole (16a, 16b) is two, and
the number of layers of the sheet (36) located between the first major side (20) of the magnet (18) and the first inner surface (28) of the magnet hole (16a, 16b) is one.

5. The rotor (10; 110; 210; 310) according to claim 3, wherein the number of layers of the sheet (36) located between the second major side (22) of the magnet (18) and the second inner surface (30) of the magnet hole (16a, 16b) is larger than the number of layers of the sheet (36) located between the first major side (20) of the magnet (18) and the first inner surface (28) of the magnet hole (16a, 16b).

6. The rotor (10; 110; 210; 310) according to claim 5, wherein
the sheet (36) is a single sheet material,
a wrapping start end of the single sheet material is located on either the first minor side (24) or the second minor side (26) of the magnet (18), and
a wrapping finish end of the single sheet material is located on either the first minor side (24) or the second minor side (26) of the magnet (18).

7. The rotor (110; 310) according to claim 1, wherein
the magnet hole (16a, 16b) further includes at least one crimped portion (38) protruding from the second inner surface (30) and contacting the second major side (22) of the magnet (18) via the sheet (36), and
the number of layers of the sheet (36) located between the second major side (22) of the magnet (18) and the crimped portion (38) of the magnet hole (16a, 16b) is larger than the number of layers of the sheet (36) located between the first major side (20) of the magnet (18) and the first inner surface (28) of the magnet hole (16a, 16b).

8. The rotor (110; 310) according to claim 7, wherein the number of layers of the sheet (36) located between the second major side (22) of the magnet (18) and the crimped portion (38) of the magnet hole (16a, 16b) is the same as the number of layers of the sheet (36) located between the first minor side (24) of the magnet (18) and the first positioning portion (32) of the magnet hole (16a, 16b).

9. The rotor (10; 110; 210; 310) according to claim 1, wherein the sheet (36) is at least partially composed of a foamable material.

10. The rotor (10; 110; 210; 310) according to claim 1, wherein the sheet (36) is at least partially composed of an insulating material.

11. The rotor (10; 110; 210; 310) according to claim 1, wherein the sheet (36) is at least partially composed of an adhesive material.

12. The rotor (210; 310) according to claim 1, wherein at least part of the magnet hole (16a, 16b) is filled with a filler (42) outside the sheet (36).

13. A rotor (410; 510) of an electric motor (100), the rotor comprising:
a rotor core (14) having a magnet hole (16a, 16b) extending in an axial direction parallel to a rotation axis (R) of the rotor (410; 510);
a magnet (18) inserted in the magnet hole (16a, 16b) and having a plurality of sides extending in the axial direction; and
a sheet (36) wrapped around the sides of the magnet (18), wherein
the sides of the magnet (18) include
a first major side (20) having a first magnetic pole and facing radially outward,
a second major side (22) having a second magnetic pole and located on an opposite side from the first major side (20),
a first minor side (24) extending between the first major side (20) and the second major side (22), and
a second minor side (26) extending between the first major side (20) and the second major side (22) and located on an opposite side from the first minor side (24),
the magnet hole (16a, 16b) includes
a first inner surface (28) facing the first major side (20) of the magnet (18),
a second inner surface (30) facing the second major side (22) of the magnet (18), and
a crimped portion (38) protruding from the second inner surface (30) and contacting the second major side (22) of the magnet (18) via the sheet (36), and
the number of layers of the sheet (36) located between the second major side (22) of the magnet (18) and the crimped portion (38) of the magnet hole (16a, 16b) is larger than the number of layers of the sheet (36) located between the first major side (20) of the magnet (18) and the first inner surface (28) of the magnet hole (16a, 16b).

14. The rotor (510) according to claim 13, wherein at least part of the magnet hole (16a, 16b) is filled with a filler (42) outside the sheet (36).
